# EUROPÄISCHE PATENTSCHRIFT

(11) **EP 1 138 239 B1**
(45) Veröffentlichungstag und Bekanntmachung des Hinweises auf die Patenterteilung: **15.09.2004**
(21) Anmeldenummer: 01101543.5
(22) Anmeldetag: 24.01.2001
(51) Int. Cl.: A47J 43/08

(54) **Handmixer**
Portable mixer
Mixeur à main

(30) Priorität: 31.03.2000 DE 20006028 U
(43) Veröffentlichungstag der Anmeldung: 04.10.2001
(73) Patentinhaber: BSH Bosch und Siemens Hausgeräte GmbH, 81739 München (DE)
(72) Erfinder: Pfersch, Harald, 83395 Freilassing (DE); Pogacar, Toni, 3311 Sempeter (SI); Ogrizek, Darko, 3320 Velenje (SI)

(56) Entgegenhaltungen:
- GB-A- 1 160 289
- US-A- 5 567 047

## Beschreibung

Die Erfindung betrifft einen Handmixer, der ein den Antriebsmotor enthaltendes Motorgehäuse aufweist, mit dem ein Schaftteil lösbar verbunden ist, in welchem Schaftteil die Welle eines Werkzeuges drehbar gelagert ist, die im an das Motorgehäuse angekoppelten Zustand des Schaftteiles drehfest mit der Welle des Antriebsmotors verbunden ist, wobei am Motorgehäuse oder am Schaftteil eine Haltenut vorgesehen ist, in welche ein am Motorgehäuse oder am Schaftteil angeordnetes Halteelement eingreift, auf das zumindest von einer Seite aus mittels einer Drucktaste eine ein Aufspreizen des Halteelementes bewirkende Druckkraft ausübbar ist.

Ein solches als Handmixer ausgebildetes Küchengerät, gemäß dem Oberbegriff von Anspruch 1, ist durch die EP-B-0 692 215 bekannt. Bei diesem bekannten Handmixer ist der die Werkzeugwelle enthaltende Werkzeugschaft lösbar mit dem Motorteil des Handmixers verbunden. Hierzu ist am Motorteil eine etwa U-förmige Spreizklammer vorgesehen, die in eine Befestigungsnut des Werkzeugschaftes eingreift. Die freien Enden der Spreizklammer liegen an Spreizflächen an. Zum Lösen der Verbindung zwischen dem Motorteil und dem Werkzeugschaft wird die Spreizklammer mittels eines Druckknopfes verschoben. Dabei gleiten die freien Enden an den Spreizflächen entlang, wodurch die Schenkel der Spreizklammer auseinander gedrückt werden und somit aus der Befestigungsnut heraustreten. Damit ist die Verbindung zwischen dem Motorteil und dem Werkzeugschaft gelöst, so dass die Teile voneinander getrennt werden können. Die Anordnung der für das Aufspreizen der Spreizklammer erforderlichen Spreizflächen sowie der für die Betätigung der Spreizklammer notwendigen Druckknöpfe stellt einen nicht unerheblichen Teile- und Montageaufwand dar.

Der Erfindung liegt die Aufgabe zugrunde, einen Handmixer der eingangs beschriebenen Art so weiterzubilden, dass der Aufwand an Teilen und damit auch der Montageaufwand für diese Teile erheblich reduziert ist.

Die Lösung der gestellten Aufgabe gelingt nach der Erfindung wie in Anspruch 1 beschrieben dadurch, dass das Halteelement auf der der Angriffseite der Drucktaste gegenüberliegenden Seite zumindest in Aufspreizrichtung ortsfest abgestützt ist. Infolge der ortsfesten Abstützung des Halteelementes auf der der Angriffseite der Drucktaste gegenüberliegenden Seite wird das Halteelement unter der Einwirkung einer Druckkraft ausgebeult und tritt somit aus der Haltenut aus, wodurch die Verbindung zwischen Motorgehäuse und Schaftteil gelöst ist.

Das Ausbeulen des Halteelementes wird dadurch begünstigt , dass das Halteelement mindestens einen ausgebaucht ausgebildeten Haltearm aufweist, der im Bereich seiner maximalen Ausbauchung mit seiner Innenseite in die Haltenut eingreift. Aufgrund der Ausbauchung besitzt der Haltearm eine gewisse Elastizität, so dass er bei der Einwirkung einer Druckkraft leichter ausbeult.

Dadurch, dass das Halteelement zwei das Schafteil umfassende, ausgebauchte Haltearme aufweist, die im Bereich ihrer maximalen Ausbauchung jeweils mit ihrer Innenseite in die Haltenut eingreifen, wird eine sehr stabile Verbindung zwischen dem Motorgehäuse und dem Schaftteil erreicht.

Das Ankoppeln des Schafteiles an das Motorgehäuse wird dadurch erleichtert, dass an dem oder den Haltearmen jeweils ein in die Haltenut eingreifender, mit einer Anlaufschräge versehener Rastvorsprung vorgesehen ist.

Der weiteren Reduzierung des Teile- und Montageaufwandes dient es, dass die Drucktaste einteilig mit dem Halteelement verbunden ist.

Dadurch, dass die Haltearme auf der der Angriffseite der Drucktaste gegenüberliegenden Seite miteinander verbunden sind, genügt für die ortsfeste Abstützung des Halteelementes auf der der Drucktaste gegenüberliegenden Seite ein einfaches Anliegen des Halteelementes an der Wand des Motorgehäuses. Das Halteelement weist damit eine geschlossene Rahmenform auf.

Dadurch, dass die Haltearme ein umfangsmäßig geschlossenes Oval bzw. eine umfangsmäßig geschlossene Raute bilden, wird das Aufspreizen des Halteelementes beim Lösen der Verbindung zwischen dem Motorgehäuse und dem Schaftteil besonders begünstigt Ist das Halteelement in Richtung seiner längeren Achse mit zwei gegenüberliegenden Drucktasten versehen, ergibt sich bei relativ kleinem Verstellweg je Drucktaste ein sicheres Lösen der Rastverbindung zwischen dem Motorgehäuse und dem Schaftteil.

Durch die zum Lösen der Rastverbindung erfolgende Betätigung der Drucktasten kann der Schaftteil dadurch gleichzeitig von dem Motorgehäuse abgedrückt werden, dass mindestens an einer Drucktaste eine auf den Schafteil wirkende Auswurfschräge vorgesehen ist.

Besonders preisgünstig ist ein Halteelement herstellbar und besonders montagebarrierefrei ausgebildet ist das Halteelement, wenn nach einer letzten bevorzugten Ausführungsform des Gegenstandes der Erfindung vorgesehen ist, dass das Haltelement mit seinen Drucktasten und mit seinen zu deren Verbindung dienenden Haltearmen einstückig aus Kunststoff-Spritzguss gefertigt ist. Außerdem ist durch die deutlich einfachere Montage die Montagezeit des Halteelements deutlich verkürzt.

Anhand eines in der Zeichnung dargestellten Ausführungsbeispieles wird die Erfindung nachfolgend noch näher erläutert. Es zeigen:

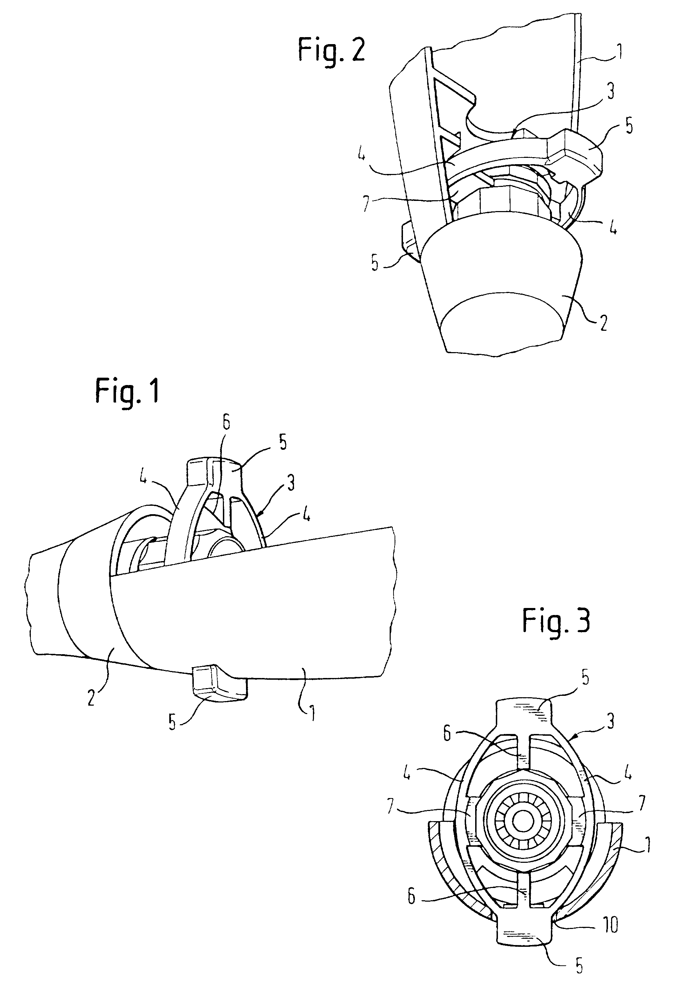

- Fig. 1: in perspektivischer Darstellung ein an das Motorgehäuse eines Handmixers angekoppeltes Schaftteil
- Fig. 2: in perspektivischer Darstellung ein an das Motorgehäuse eines Handmixers angekoppeltes Schaftteil, in einer um 90° gegenüber der Darstellung in Fig. 1 gedrehten Darstellung.
- Fig. 3: eine Draufsicht auf die Ankoppelseite des Motorgehäuses,

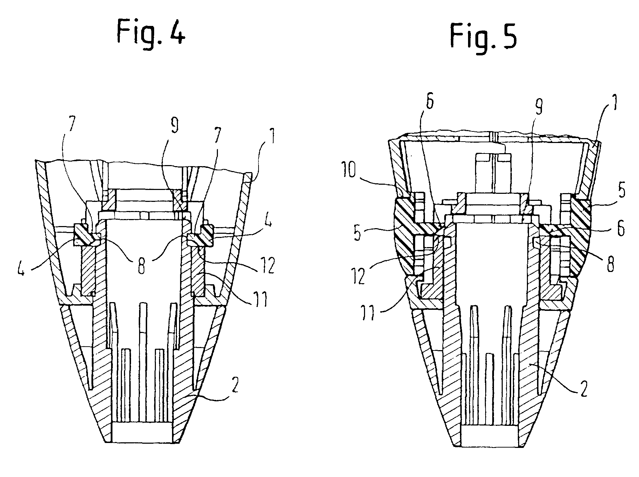

- Fig. 4: die Ankoppelstelle eines Motorgehäuses und Schaftteiles im Längsschnitt,
- Fig. 5: die Ankoppelstelle eines Motorgehäuses und Schaftteiles in einem gegenüber dem Längsschnitt nach Fig. 4 um 90° versetzten Längsschnitt.

Mit 1 ist das Motorgehäuse eines als Handmixer ausgebildeten Küchengerätes bezeichnet. An das Motorgehäuse 1 ist ein Schaftteil 2 angekoppelt, in dem die Welle eines sich auf der der Ankoppelseite des Schaftteiles gegenüberliegenden Seite befindlichen Werkzeuges drehbar gelagert ist. Im an das Motorgehäuse 1 angekoppelten Zustand des Schaftteiles 2 ist die Welle des Werkzeuges drehfest mit der Welle des Antriebsmotors verbunden. Die Welle und das Werkzeug sind in der Zeichnung nicht dargestellt.

Die für das Arbeiten mit dem Handmixer notwendige feste Verbindung von Motorgehäuse 1 und Schaftteil 2 wird mittels eines, vorzugsweise aus Kunststoff bestehenden Halteelementes 3 erreicht, welches zwei zu einem umfangsmäßig geschlossenen Oval verbundene Haltearme 4 aufweist. Das Halteelement 3 weist somit die Form eines Rahmens auf, dessen Längsachse größer als seine Querachse ist. In Richtung der längeren Achse des von den Haltearmen 4 gebildeten Ovales sind einander gegenüberliegend zwei Drucktasten 5 einteilig an dem Halteelement 3 angeformt. An jeder Drucktaste 5 ist eine Auswurfschräge 6 vorgesehen . Gegenüber den Drucktasten um 90° oder angenähert 90° versetzt ist an jedem Haltearm 4 ein Rastvorsprung 7 angebracht, welcher in eine an dem Schaftteil 2 ausgebildete Haltenut 8 eingreift. Die Haltearme 4, die Drucktasten 5 sowie die Auswurfschräge 6 und die Rastvorsprünge 7 bilden das einteilige Halteelement 3.

Durch die Verbindung der Haltearme 4 mit den Drucktasten 5 sind die Haltearme 4 in der quer zur Betätigungsrichtung der Drucktasten 5 liegenden Richtung, also in Aufspreizrichtung ortsfest angekoppelt. Somit können die Haltearme 4 bei auf die Drucktasten 5 ausgeübtem Druck nur im Bereich ihrer Mitte nach außen ausgebeult werden. Bei diesem Ausbeulen wird der im Mittenbereich jedes Haltearmes 4 vorgesehene Rastvorsprung 7 aus der Haltenut 8 gezogen und damit der Schaftteil 2 freigegeben.

Beim Drücken der Drucktasten 5 gleitet die Auswurfschräge 6 über den Endrand 9 des Schaftteiles 2 und drückt dadurch den Schaftteil 2 vom Motorgehäuse 1 ab. Die Auswurfschrägen 6 sind hinsichtlich ihres Abstandes von dem Endrand 9 so dimensioniert, dass sie erst nach einer bestimmten Eindrücktiefe der Drucktasten 5 auf den Endrand 9 auftreffen und dann auf diesen aufgleiten. Vor Erreichen dieser Eindrücktiefe erfolgt schon die Ausbeulung der Haltearme 4 und damit das Lösen der zwischen dem Motorgehäuse 1 und dem Schaftteil 2 bestehenden Rastverbindung. Damit ist beim Auftreffen der Auswurfschrägen 6 auf den Endrand 9 die Rastverbindung bereits gelöst, so dass der Schaftteil 2 durch die Auswurfschrägen 6 vom Motorgehäuse 1 abgedrückt werden kann.

Das Halteelement 3 ist, wie bereits oben erwähnt, mit allen für das Halten und Lösen des Schaftteiles 2 notwendigen Teilen zu einem einzigen Bauteil verbunden. Ein solches Bauteil läßt sich , insbesondere wenn es aus Kunststoff besteht, in einfacher Weise herstellen. Da das Motorgehäuse 1 aus zwei Gehäusehalbschalen besteht, kann das einteilige Halteelement 3 vor dem Zusammenfügen der beiden Halbschalen an der entsprechenden Stelle in die eine Halbschale eingesetzt werden. Dabei wird das Halteelement 3 mit der einen Drucktaste 5 in eine an der Gehäusehalbschale vorgesehene Durchstecköffnung 10 eingefügt. Beim Anfügen der anderen Gehäusehalbschale gelangt die andere Drucktaste 5 in die Durchstecköffnung 10 dieser Gehäusehalbschale. Damit ist das Halteelement 3 gleichzeitig am Motorgehäuse fixiert. Eine zusätzliche Abstützung erfährt das Halteelement 3 durch einen im Motorgehäuse 1 angeordneten Abstützring 11, auf dessen oberen Umfangsrand 12 die Haltearme 4 in axialer Richtung auch gegen hohe Kräfte ausreichend abgestützt sind. Der Stützring 11 bildet gleichzeitig eine Führung für den Schaftteil 2.

## Patentansprüche

1. Handmixer, mit einem einen Antriebsmotor enthaltendes Motorgehäuse (1), mit dem ein Schaftteil (2) lösbar verbunden ist, in welchem Schaftteil (2) die Welle eines Werkzeuges drehbar gelagert ist, die im an das Motorgehäuse (1) angekoppelten Zustand des Schaftteiles (2) drehfest mit der Welle des Antriebsmotors verbunden ist, wobei eine Haltenut (8) vorgesehen ist, in welche ein Halteelement (3) eingreift, auf das zumindest von einer Seite aus mittels einer Drucktaste (5) eine ein Aufspreizen des Halteelementes (3) bewirkende Druckkraft ausübbar ist, **dadurch gekennzeichnet, dass** das Halteelement (3) auf der der Angriffseite der Drucktaste (5) gegenüberliegenden Seite zumindest in Aufspreizrichtung ortsfest abgestützt ist und entweder die Haltenut (8) am Schaftteil (2) und das Halteelement (3) am Motorgehäuse (1), oder die Haltenut (8) am Motorgehäuse (1) und das Halteelement (3) am Schaftteil (2) vorgesehen ist.

2. Handmixer nach Anspruch 1, **dadurch gekennzeichnet, dass** das Halteelement (3) mindestens einen ausbauchbaren Haltearm (4) aufweist, der wenigstens annähernd mit seinen Ausbauchungsbereichen in die Haltenut (8) eingreift.

3. Handmixer nach Anspruch 1, **dadurch gekennzeichnet, dass** das Halteelement (3) zwei das Schafteil (2) umfassende, ausbauchbare Haltearme (4) aufweist, die in ihrem Ausbauchungsbereich jeweils mit ihrer Innenseite in die Haltenut (8) eingreifen.

4. Handmixer nach Anspruch 2 oder 3, **dadurch gekennzeichnet, dass** an dem oder den Haltearmen(4) jeweils ein in die Haltenut (8) eingreifender, mit einer Anlaufschräge versehener Rastvorsprung (7) vorgesehen ist.

5. Handmixer nach einem der vorhergehenden Ansprüche, **dadurch gekennzeichnet, dass** die Drucktaste (5) einteilig mit dem Halteelement (3) verbunden ist.

6. Handmixer nach einem der Ansprüche 3-5, **dadurch gekennzeichnet, dass** die Haltearme (4) auf der der Angriffseite der Drucktaste (5) gegenüberliegenden Seite miteinander verbunden sind.

7. Handmixer nach Anspruch 6, **dadurch gekennzeichnet, dass** die Haltearme (4) ein umfangsmäßig geschlossenes Oval bilden.

8. Handmixer nach Anspruch 6, **dadurch gekennzeichnet, dass** die Haltearme (4) eine umfangsmäßig geschlossene Raute bilden.

9. Handmixer nach Anspruch 7 oder 8, **dadurch gekennzeichnet, dass** das Halteelement (3) in Richtung seiner längeren Achse mit zwei gegenüberliegenden Drucktasten (5) versehen ist.

10. Handmixer nach einem der vorhergehenden Ansprüche, **dadurch gekennzeichnet, dass** mindestens an einer Drucktaste (5) eine auf den Schafteil (2) wirkende Auswurf schräge (6) vorgesehen ist.

11. Handmixer nach einem der vorhergehenden Ansprüche, **dadurch gekennzeichnet, dass** die Haltenut (8) am Schaftteil (8) angeordnet ist.

12. Handmixer nach einem der vorhergehenden Ansprüche, **dadurch gekennzeichnet, dass** das Halteelement (3) mit seinen die einander gegenüberliegenden Drucktasten (5) verbindenden Haltearmen (4) einstückig aus Kunststoffspritzguss gefertigt ist.

## Claims

1. Hand mixer comprising a motor housing (1) which contains a drive motor and with which a shank part (2) is detachably connected, in which shank part (2) there is rotatably mounted the shaft of a tool which in the state of the shank part (2) being coupled to the motor housing (1) is connected with the shaft to the drive motor to be secure against rotation relative thereto, wherein a retaining groove (8) is provided in which is engaged a retaining element (3) on which a pressure force causing spreading of the retaining element (3) can be exerted from at least one side by means of a pushbutton (5), **characterised in that** the retaining element (3) is supported in stationary position at least in spreading direction on the side opposite the engagement side of the pushbutton (5) and either the retaining groove (8) is provided at the shank part (2) and the retaining element (3) at the motor housing (1) or the retaining groove (8) is provided at the motor housing (1) and the retaining element (3) at the shank part (2).

2. Hand mixer according to claim 1, **characterised in that** the retaining element (3) comprises at least one retaining arm (4) which can be bulged out and which engages at least approximately by its bulge-out regions in the retaining groove (8).

3. Hand mixer according to claim 1, **characterised in that** the retaining element (3) comprises two retaining arms (4), which can be bulged out and embrace the shank part (2) and which engage in the bulge-out region thereof each time by the inner side thereof in the retaining groove (8).

4. Hand mixer according to claim 2 or 3, **characterised in that** a respective detent projection (7) engaging in the retaining groove (8) and provided with a run-up chamfer is provided at the retaining arm or arms (4).

5. Hand mixer according to one of the preceding claims, **characterised in that** the pushbutton (5) is integrally connected with the retaining element (3).

6. Hand mixer according on of claims 3 to 5, **characterised in that** the retaining arms (4) are connected together on the side opposite the engagement side of the pushbutton (5).

7. Hand mixer according to claim 6, **characterised in that** the retaining arms (4) form a circumferentially closed oval.

8. Hand mixer according to claim 6, **characterised in that** the retaining arms (4) form a circumferentially closed rhombus.

9. Hand mixer according to claim 7 or 8, **characterised in that** the retaining element (3) is provided in the direction of its longer axis with two opposite pushbuttons (5).

10. Hand mixer according to one of the preceding claims, **characterised in that** an ejector chamfer (6) acting on the shank part (2) is provided at least at one pushbutton (5).

11. Hand mixer according to one of the preceding claims, **characterised in that** the retaining groove (8) is arranged at the shank part (8).

12. Hand mixer according to one of the preceding claims, **characterised in that** the retaining element (3) together with its retaining arms (4) connecting the mutually opposite pushbuttons (5) is integrally made from a plastics material injection moulding.

## Revendications

1. Mixeur à main, avec un carter moteur (1) contenant un moteur d'entraînement et avec lequel un élément tige (2) est relié de façon amovible, dans lequel élément tige (2) l'arbre d'un outil est logé de façon rotative et lorsque l'élément tige (2) est accouplé au carter moteur (1) il est relié et solidaire en rotation avec l'arbre du moteur d'entraînement, une rainure de maintien (8) étant prévue, dans laquelle vient s'accrocher un élément de maintien (3) sur lequel une force de pression provoquant une expansion de l'élément de maintien (3) peut être exercée au moins à partir d'un côté, à l'aide d'un bouton poussoir (5), **caractérisé en ce que** sur le côté opposé au côté de préhension du bouton poussoir (5), l'élément de maintien (3) est appuyé en un endroit fixe au moins dans le sens d'expansion et soit la rainure de maintien (8) est prévue sur l'élément tige (2) et l'élément de maintien (3) est prévu sur le carter moteur (1) ou la rainure de maintien (8) est prévue sur le carter moteur (1) et l'élément de maintien (3) est prévu sur l'élément tige (2).

2. Mixeur selon la revendication 1, **caractérisé en ce que** l'élément de maintien (3) est muni d'au moins un bras de maintien (4) qui peut être renflé, qui s'accroche au moins approximativement dans la rainure de maintien (8), par l'intermédiaire de ses zones de renflement.

3. Mixeur à main selon la revendication 1, **caractérisé en ce que** l'élément de maintien (3) est muni de deux bras de maintien (4) entourant l'élément tige (2) et pouvant être renflés, qui dans leur zone de renflement s'accrochent respectivement dans la rainure de maintien (8), par l'intermédiaire de leur face interne.

4. Mixeur à main selon la revendication 2 ou 3, **caractérisé en ce qu'**une saillie d'encliquetage (7) munie d'une inclinaison d'attaque et s'accrochant respectivement dans la rainure de maintien (8) est prévue sur le ou les bras de maintien (4).

5. Mixeur à main selon l'une quelconque des revendications précédentes, **caractérisé en ce que** le bouton poussoir (5) est relié en monobloc avec l'élément de maintien (3).

6. Mixeur à main selon l'une quelconque des revendications 3 à 5, **caractérisé en ce que** les bras de maintien (4) sont reliés entre eux sur le côté opposé au côté de préhension du bouton poussoir (5).

7. Mixeur à main selon la revendication 6, **caractérisé en ce que** les bras de maintien (4) forment un ovale fermé sur sa périphérie.

8. Mixeur à main selon la revendication 6, **caractérisé en ce que** les bras de maintien (4) forment un losange fermé sur sa périphérie.

9. Mixeur à main selon l'une quelconque des revendications 7 ou 8, **caractérisé en ce qu'**en direction de son axe plus long, l'élément de maintien (3) est muni de deux boutons poussoirs (5) opposés.

10. Mixeur à main selon l'une quelconque des revendications précédentes, **caractérisé en ce qu'**une inclinaison d'éjection (6) agissant sur l'élément tige (2) est prévue sur au moins l'un des boutons poussoirs (5).

11. Mixeur à main selon l'une quelconque des revendications précédentes, **caractérisé en ce que** la rainure de maintien (8) est disposée sur l'élément tige (8).

12. Mixeur à main selon l'une quelconque des revendications précédentes, **caractérisé en ce que** l'élément de maintien (3) est conçu par moulage par injection de matière synthétique, en monobloc avec ses bras de maintien (4) reliant les boutons poussoirs (5) opposés.
